Europäisches Patentamt

European Patent Office

Office européen des brevets

(19)

(11) Publication number: **0 163 167**
**A1**

(12) **EUROPEAN PATENT APPLICATION**

(21) Application number: 85105475.9

(22) Date of filing: 05.05.85

(51) Int. Cl.⁴: **H 01 F 27/08**
**H 01 F 33/00, H 02 M 7/04**
**B 23 K 9/10**

(30) Priority: 31.05.84 IT 2197084 U

(43) Date of publication of application:
04.12.85 Bulletin 85/49

(84) Designated Contracting States:
AT BE CH DE FR GB LI

(71) Applicant: SIEV SOCIETA' INDUSTRIA
ELETTROMECCANICA VENETA S.p.A.
Via Ortigara, 34
I-36050 Olmo di Creazzo (Vicenza)(IT)

(72) Inventor: Zilio, Adone
Via Verdi, 66
I-36100 Vicenza(IT)

(74) Representative: Giambrocono, Alfonso, Dr. Ing. et al,
Ing. A. Giambrocono & C. S.r.l. Via Rosolino Pilo 19/B
I-20129 Milano(IT)

(54) Transformer device for electric welding.

(57) An electric welding device comprising a three-phase transformer, a rectifier circuit and a regulator circuit which cuts-down the sinusoidal wave by thyristor control. The primary and secondary windings (19, 24) of each phase are disposed on the relative column (13) of the transformer magnetic circuit substantially concentrically, and are spaced radially from each other and from the column (13) so as to form passages for circulation of the cooling air produced by a fan.

Fig. 4

EP 0 163 167 A1

- 1 -

TRANSFORMER DEVICE FOR ELECTRIC WELDING

The present invention relates to a device comprising a three-phase transformer, a rectifier circuit and a regulator circuit which cuts-down the sinusoidal wave by thyristor control.

Welding devices are known utilising a transformer which, in the case of three-phase current, is provided with three primary windings and three secondary windings which can be moved relative to the former so as to obtain different output currents, which are rectified by diodes. The main drawback of these known welding devices, one example of which is represented by Italian utility model 22159 B/81 of 22.6.1981, is that they are bulky.

Other known welding devices which do not use transformers with movable secondary windings are more compact than the preceding, but are still of considerable bulk, require relatively complicated wiring, and pose considerable problems in terms of proper dispersal of the heat developed in the device during use, because the various components of the device create tortuous paths and dead corners for the cooling air flow produced by the fan which forms part of the device.

The main object of the present invention is to provide a welding transformer device which, by virtue of a special arrangement, results in compactness, simple wiring and assembly, and rational cooling of the components and their parts.

The device according to the invention, comprising a three-phase transformer, a rectifier circuit and a circuit for cutting-down the sinusoidal wave by thyristor control, is characterised essentially in that the primary and secondary windings of each phase are disposed on the relative column of the transformer magnetic circuit substantially concentrically and are spaced radially from each other and from the column, so as to form intermediate passages for effective circulation of the cooling air produced by the fan.

Advantageously, rigid with at least one of the yokes of the magnetic circuit there are provided projecting arms to which plates are removably connected, carrying rectifier diodes, a thyristor and a radiator for this latter, and which extend parallel to the axis of the transformer and at a certain distance therefrom.

Advantageously, a plate is provided which carries recirculation diodes and a plate radiator-suppressor, and is connected to a shunt so as to reduce the connections between said parts to a minimum.

The invention will be more apparent from the detailed description given hereinafter by way of example, with reference to the accompanying drawing in which:

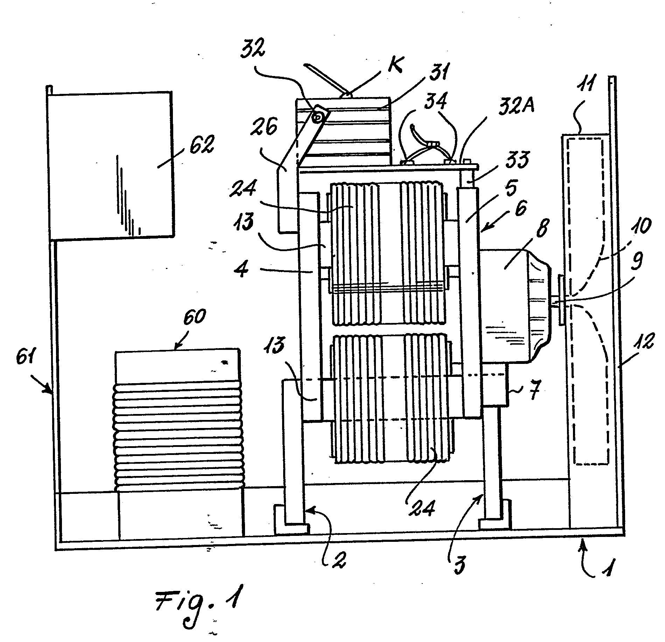

Figure 1 is a diagrammatic side view of the device with some parts omitted for representational clarity;
Figure 2 is a perspective view of the device;
Figure 3 is an end view of the transformer;
Figure 4 is a diagrammatic cross-section through a column with its relative phase windings;
Figure 5 is a perspective view of the winding spacers;
Figure 6 is a detailed sectional view of the connection between a support arm and the thyristor radiator;
Figure 7 is a detailed view of the plate carrying the recirculation diodes and the rectifier-suppressor.

In the figures, the reference numeral 1 indicates the supporting baseplate of the device, which can be provided with wheels A for easy transferability of the device. Two load-bearing trestles 2, 3 of metal section bar construction are fixed in any known manner to the plate 1, and are welded upperly to the annular yokes 4, 5 of a three-phase transformer indicated overall by 6.

A plate 7 with bent ends is fixed by screws on to the top of the trestle 3, and carries in any known manner an electric motor 8 such that it is centered with respect to the aperture of the yoke 5 and partly penetrates into said aperture.

To the shaft 9 of said motor there is connected a fan 10 encased in a ring 11 carried by the baseplate 1 in front of a grille wall 12 rigid with said baseplate.

The two annular yokes 4, 5 are interconnected by three equidistant columns of square cross-section 13 which, together with the former, form the magnetic circuit of the transformer 6.

On the inner and outer faces of each column there is fixed a plate 14, of which the ends 15, projecting beyond the face, are bent outwards.

Before fixing the columns 13 to the two yokes 5 and 6, a spacer 16 is mounted on said ends 15, and for this purpose comprises a corresponding longitudinal slot 17. The spacer has an arcuate intermediate part 18 for supporting the primary winding 19A, and two containing shoulders 19.

When the four spacers 16 have been mounted on the ends 15 of the plate 14, the primary winding 19A is wound by known methods. On termination of this operation, further spacers 20 are mounted on the shoulders 19 of the spacers 16, and for this purpose comprise grooves 21 in their shoulders 22 to define a support part 23 for the secondary winding 24. This latter is then wound, together with the auxiliary windings such as the synchronisation winding and that for feeding the electronic circuit of the thyristors K.

After these operations, the windings are treated (oven-treated with varnish) by conventional methods, and the columns 13 with the respective windings are then welded to the yokes 4, 5.

This construction creates adequate air passages 25 both between the primary winding 19 and secondary winding 24 and between the primary winding 19 and the faces of the column 13.

Three angularly equidistant arms of broken-line axis 26 are welded to the yoke 4 so that they project outwards from the yoke. At their free end, the arms comprise a hole in which a threaded pin 27 is inserted. A spacer ring 28 is mounted on this pin, and the head 29 of the pin is inserted into a longitudinal slot 30 which is provided in a thermal radiator 31 and is open at its ends and towards the pin.

A nut 32 is mounted and tightened on said pin on the other side of the arm 26, to removably fix the radiator 31 to the relative arm 26.

Each radiator, of conventional type, supports a thyristor K and is fixed to a plate 32A. The three plates are situated external to the transformer 6, are mutually equidistant, are kept spaced from the transformer 6 and extend along the interspaces present between the consecutive transformer windings.

An insulating foot 33 fixed to the plate 32 spaces it to the required extent from the transformer 6. This space is useful for the purpose of ventilating the plate and the components present thereon, namely the rectifier diodes 34, the said radiator 31 and the thyristor K.

A conventional energy holding and equalising impedance 60 is fixed on the baseplate 1 in any known manner in a position between the transformer 6 and the front grille wall 61 of the device. This wall upperly carries a box 62 housing the electrical/electronic control and regulating circuitry for the device.

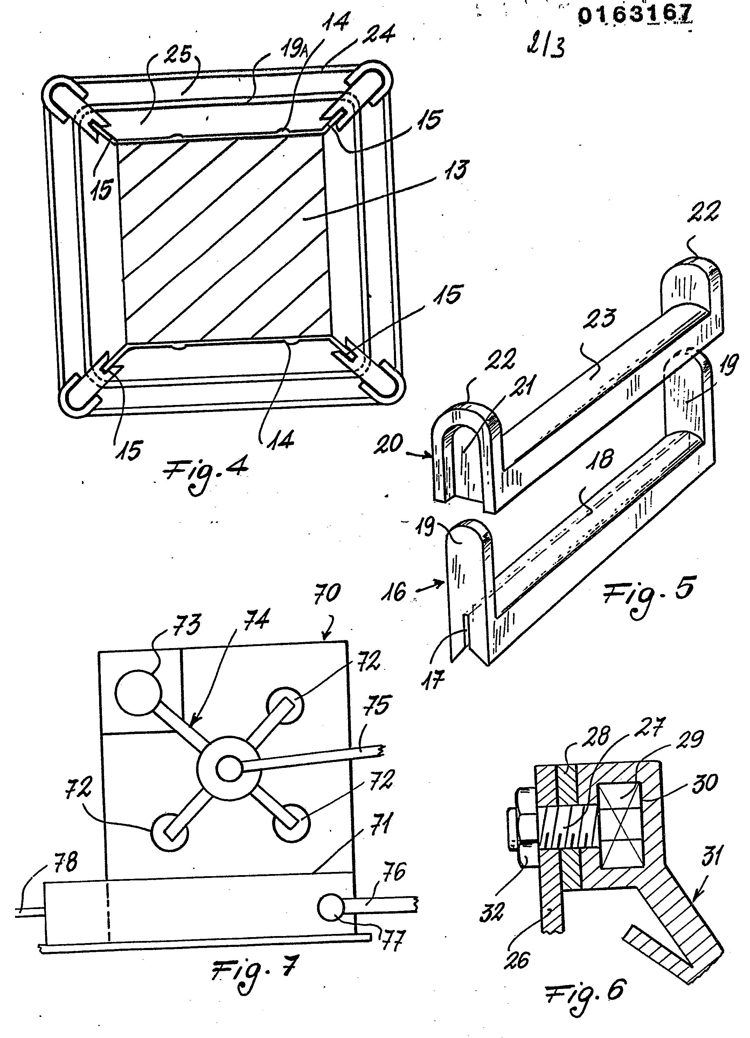

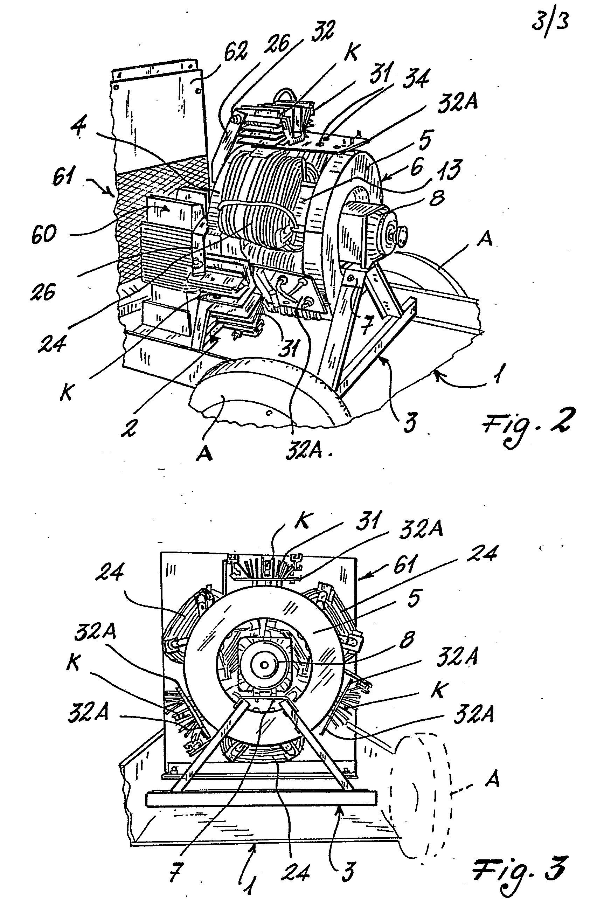

A plate 70 (see Figure 7) and a conventional shunt 71 are also supported on the baseplate 1. The plate 70 carries three recirculation diodes 72 connected in parallel with each other and with a selenium plate rectifier 73, the electrical connections being made by means of the dial connector 74, to which a conductor 75 is fixed.

One conductor 76 and one connection pin 77 are used for electrically and mechanically connecting the shunt 71 to the plate 70. The shunt output conductor is indicated by 78.

As is apparent from the detailed description given heretofore, the device of the invention has many substantial advantages over conventional operationally equivalent designs, and in particular: greater compactness resulting in a considerable saving of material, more effective ventilation which increases the life and reliability of the device, more advantageous dimensioning of the parts where heat is generated, and most importantly a more natural and rational construction, which is particularly noteworthy in the transformer part, and which not only simplifies and accelerates assembly but also results in the practical elimination or substantial reduction of scrap and cabling, with consequent considerable reduction in production costs.

CLAIMS:

1.    An electric welding device comprising a three-phase transformer, a rectifier circuit and a regulator circuit which cuts-down the sinusoidal wave by thyristor control, characterised in that the primary and secondary windings (19, 24) of each phase are disposed on the relative column (13) of the transformer magnetic circuit substantially concentrically and are spaced radially from each other and from the column (13), so as to form intermediate passages for the circulation of the cooling air produced by a fan (10).

2.    A device as claimed in claim 1, characterised in that rigid with at least one of the yokes (4, 5) of the magnetic circuit there are provided projecting arms (26) to which plates (32A) are removably connected, carrying rectifier diodes (34), at least one thyristor (K) and a radiator (31) for this latter, and which extend parallel to the axis of the transformer (6) and at a certain distance therefrom.

3.    A device as claimed in the preceding claims, characterised by comprising a plate (70) which carries recirculation diodes (72) and a selenium plate rectifier-suppressor (73), and is connected to a shunt (71).

4.    A device as claimed in the preceding claims, characterised in that the transformer (6) is supported by trestles (2, 3), which for this purpose are fixed at their upper ends to the annular yokes (4, 5), one of said trestles (3) supporting the electric motor (8) of the fan substantially at the centre of the ring of the yoke (5).

5.    A device as claimed in the preceding claims, characterised in that the energy holding and equalising impedance (60), the transformer (6) and the fan (8, 10) are disposed in series in the air flow direction.

Fig. 1

Fig. 4

Fig. 5

Fig. 7

Fig. 6

*Fig. 2*

*Fig. 3*

# EUROPEAN SEARCH REPORT

European Patent Office

## DOCUMENTS CONSIDERED TO BE RELEVANT

EP 85105475.9

| Category | Citation of document with indication, where appropriate, of relevant passages | Relevant to claim | CLASSIFICATION OF THE APPLICATION (Int. Cl 4) |
|---|---|---|---|
| | DE − A − 2 019 165 (HEMETRON) | | H 01 F 27/08 |
| Y | * Claims 1,4 * | 1,5 | H 01 F 33/00 |
| A | * Page 5, paragraph 3 − page 7, paragraph 2; fig. 1−3a * | 2,3 | H 02 M 7/04 |
| | | | B 23 K 9/10 |
| | −− | | |
| | CH − A5 − 603 002 (AES) | | |
| Y | * Claims I,1,2,7,9; column 2, line 27 − column 3, line 24; fig. 1−3 * | 1,5 | |
| | −− | | |
| | US − A − 3 984 654 (HOFFMAN) | | |
| A | * Claims 1,15; column 3, line 23 − column 7, line 11; fig. 1,2 * | 1−3 | |
| | −− | | |
| | EP − A1 − 0 069 006 (SIEV) | | TECHNICAL FIELDS SEARCHED (Int Cl 4) |
| A | * Page 2, line 7 − page 3, line 77; fig. 1−3 * | 1 | B 23 K 9/00 |
| | −− | | B 23 K 11/00 |
| | DE − A1 − 3 320 575 (MITSUBISHI) | | H 01 F 27/00 |
| A | * Page 5, line 32 − page 7, line 3; page 9, line 15 − page 12, line 14; fig. 2,4,5 * | 2,3 | H 01 F 29/00 |
| | | | H 01 F 33/00 |
| | −− | | H 02 M 7/00 |
| | AT − B − 219 705 (OBB) | | |
| A | * Totality * | 4 | |
| | −−−− | | |

The present search report has been drawn up for all claims

| Place of search | Date of completion of the search | Examiner |
|---|---|---|
| VIENNA | 04−09−1985 | PIRKER |